# EUROPEAN PATENT APPLICATION

(11) **EP 3 219 487 A1**
(43) Date of publication of application: **20.09.2017**
(21) Application number: 16275046.7
(22) Date of filing: 18.03.2016
(51) Int. Cl.: B32B 27/14, F16F 15/305

(54) **COMPOSITE FLYWHEEL**

(71) Applicant: Crompton Technology Group Limited, Solihul, West Midlands B90 4SS (GB)
(72) Inventor: BERNARD, James, Banbury, Oxfordshire OX16 4XD (GB); GHASIMI, Sohrab, Banbury, Oxfordshire OX16 4XD (GB)
(74) Representative: Gardiner, Stephen Robin

(57) **Abstract**

A method of manufacturing a flywheel comprising: forming a first hollow cylinder from glass fibre composite with magnetic particles dispersed through at least part of the cylinder; curing said first cylinder in a first curing step; forming a second hollow cylinder from carbon fibre composite; and curing said second hollow cylinder in a second curing step. It has been recognised that winding and curing the rotor in a single operation results in low yield due to matrix cracking and fibre buckling. This is due to tensile through-thickness stresses and inter-lamina stresses that develop during the curing process. As the matrix cures, the chemical processes cause it to shrink by 2-3% in volume. As the component cools from the post cure temperature to room temperature the matrix desires to shrink further due to its thermal expansion coefficient. Any resistance to this shrinkage results in stresses within the matrix. This phenomenon is enhanced by the differing coefficients of thermal expansion of the different materials with the CTE of the matrix being a closer match to the CTE of the glass than it is to the CTE of the carbon. As a result a harsh stress gradient develops in both the radial and shear directions. By curing the carbon fibre cylinder separately from the glass fibre cylinder, there is no or substantially no chemical bond between the two cylinders, i.e. substantially no chemical bond between the matrix of the carbon fibre layer and the matrix of the adjacent glass fibre layer. The separate curing means that there is no polymeric crosslinking to join these materials together. The shrinkage that takes place during the cure (and cooling) of the first hollow cylinder does not result in stresses arising at the interface with the second hollow cylinder.

## Description

### Technical Field

The present disclosure relates to composite flywheels and methods for manufacturing composite flywheels.

### Background

Flywheels are energy storage devices that store energy by spinning. The energy stored is proportional to the mass of the flywheel and is proportional to the square of the rotational speed. While early flywheels stored large amounts of energy by using a large mass, modern flywheels tend to improve energy storage by increasing rotation speed. Increased rotation speed is possible through the use of composite materials exhibiting high tensile strengths that can be spun at extremely high rotation speeds without breaking up. Composite flywheels typically use high tensile carbon fibre filaments for this purpose (although other materials may be used).

A magnetic flywheel typically rotates around a stator and is magnetised so that it may be spun up (the flywheel acting as a motor such that imparted electrical energy is converted to rotational kinetic energy) or spun down (the flywheel acting as a generator such that stored rotational kinetic energy is converted to electrical energy). To imbue a composite flywheel with magnetic properties, at least a part of the flywheel typically contains dispersed magnetic particles.

A composite flywheel still needs a certain amount of mass that will give it the desired physical properties. As carbon fibre is expensive, it is generally preferred to minimise the amount of carbon fibre used where possible. Equally, to minimise cost it is preferred to minimise the magnetic layer to the minimum necessary. Furthermore, glass is denser than carbon fibre and therefore adds mass at lower cost. It should also be noted that when the flywheel is spinning, a radial tensile stress develops in the carbon fibre section. The flywheel is not strong in this direction as all the fibres are in the hoop direction and so it is desirable to minimise this stress. As the glass has a lower modulus it expands into the carbon section imparting a compressive radial stress and hence minimises the radial tensile stress in the carbon section.

In a typical arrangement, the rotor is made with three layers; a magnetically loaded composite section (MLC), a glass composite section and a carbon composite section. Such a rotor is described for example in US patent number 6150742. The three layers of the flywheel component are hoop wet filament wound and the manufacture is performed in one single winding operation. In one example, the MLC layer is made from S-2 glass fibre, epoxy resin and metallic NdFeB powder; the glass layer is made from S-2 glass fibre and epoxy resin (without metallic powder); and the carbon layer is made from intermediate modulus (IM) carbon fibre and epoxy resin. After winding, all sections are cured together so as to create bond strength between all of the sections via the cross-linking of the epoxy resin.

To date manufacture of such flywheels has suffered from low yield due to crack formation in the matrix and fibre buckling that results in reduced strength of the final product. It will be appreciated that high strength is of great importance in flywheels that spin at extremely high speeds. Failure of a fast spinning flywheel can be catastrophic and very dangerous and therefore quality controls place a high standard on the end product.

### Summary

According to a first aspect, the present disclosure provides a method of manufacturing a flywheel comprising: forming a first hollow cylinder from glass fibre composite with magnetic particles dispersed through at least part of the cylinder; curing said first cylinder in a first curing step; forming a second hollow cylinder from carbon fibre composite; and curing said second hollow cylinder in a second curing step.

It has been recognised that winding and curing the rotor in a single operation results in low yield due to matrix cracking and fibre buckling. This is due to tensile through-thickness stresses and inter-lamina stresses that develop during the curing process. As the matrix cures, the chemical processes cause it to shrink by 2-3% in volume. Curing involves the hardening of the polymeric material by cross-linking of polymer chains. This may be brought about using any suitable technique, preferably by heating. Any suitable time and temperatures may be used so long as the crosslinking process is substantially complete. The timings and temperatures of the cure process will depend on the matrix being used. However, it will be understood that the curing may involve one or more isothermal dwells with steady temperature ramps in between. The cure process is selected to control various factors such as to reduce residual stresses within the cured component, to maximise component strength and to minimise void content. The exothermic nature of the curing reaction also needs to be taken into account, particularly in larger components where the amount of resin and therefore the heat output is much greater. As the component cools from the post cure temperature to room temperature the matrix shrinks further due to its coefficient of thermal expansion. Any resistance to this shrinkage results in stresses within the matrix. For example, the modulus of a typical intermediate modulus (IM) carbon fibre is around 250 GPa, while the modulus of a typical S-glass fibre is around 90 GPa. The stiffer carbon resists the shrinkage of the matrix, whilst the lower modulus glass, to a much greater extent, allows the matrix to shrink. This phenomenon is further enhanced by the differing coefficients of thermal expansion (CTE) of the different materials. The CTE of the matrix (a typical epoxy resin) is around 60 µm/m°C, the CTE of the carbon fibre along the axis of the fibre is around - 0.25 µm/m°C, and the CTE of the glass fibre is around 3 µm/m°C. Therefore the CTE of the matrix is a closer match to the CTE of the glass than it is to the CTE of the carbon. This effect is in addition to any effects due to volume fraction discrepancy and/or fibre tension discrepancy and/or through-thickness temperature discrepancy during cure. As a result a harsh stress gradient develops in both the through-thickness radial direction and inter-lamina shear directions.

By curing the carbon fibre cylinder (i.e. second hollow cylinder) separately from the glass fibre cylinder (i.e. first hollow cylinder), there is no chemical bond between the two cylinders, i.e. no chemical bond between the matrix of the carbon fibre layer and the matrix of the adjacent glass fibre layer. The separate curing means that there is no polymeric crosslinking to join these different sections together. The shrinkage that takes place during the cure (and cooling) of the first hollow cylinder does not result in stresses arising at the interface with the second hollow cylinder.

By breaking the component manufacture into two winding stages (Stage 1: magnetically loaded composite (MLC) section and Stage 2: Carbon section), the modulus and CTE discrepancies are eliminated. The reduction in thickness of the cured sections (i.e. each being thinner than a flywheel where all sections are cured in a single step) also reduces any temperature discrepancy resulting during cure. It also allows for a constant tension and therefore constant volume fraction through the thickness as the risk of fibre buckling is reduced. To explain further, in thicker parts, the fibre tension needs to be reduced towards the outer diameter otherwise the high tension can cause fibre buckling in the inner fibre layers. Such variations in tension are undesirable as they also affect the ratio of fibre to resin (higher fibre tension squeezes out more resin leading to a lower resin volume fraction) which leads to variations in stress across the thickness of the material. By forming the flywheel in two separately cured sections, each section is thinner and a constant fibre tension can be used without fibre buckling which in turns means better material properties with less chance of cracking and less chance of failure. The reduction in stress build up during manufacture reduces the failure rate due to cracking or fibre buckling and this improves the yield, i.e. improves the number of manufactured articles that pass quality control.

During operation the low modulus glass section is spun into the stiffer carbon section and hence is under radial compression, as a result little bond strength or interference between the two cylinders is required.

It will be appreciated that, being a magnetic flywheel (i.e. an electro-mechanical flywheel as opposed to a mechanical-mechanical flywheel), the flywheel is typically rotated around a central stator. The flywheel may be mounted to the stator via a low friction bearing, e.g. an end cap fitted to one end of the flywheel. This is in contrast to the hub and spoke arrangement of a typical mechanical-mechanical flywheel.

The first hollow cylinder may be formed entirely from glass fibre composite with magnetic particles dispersed throughout. This may be suitable for smaller flywheels and is easy to manufacture, e.g. using a single process to impregnate the wound fibre tows with the magnetic powder epoxy resin mix. However the magnetic particles are typically expensive and the thickness that is required to achieve the desired magnetic properties is lower than the thickness of glass fibre that is desirable overall, e.g. to create sufficient mass in the flywheel and to increase the radial compression applied to the outer carbon fibre cylinder. Therefore in preferred examples the step of forming said first glass fibre composite cylinder comprises: forming a first section of glass fibre composite with magnetic particles dispersed therein; and forming a second section of glass fibre composite around said first section without magnetic particles dispersed therein. The magnetic particles may be dispersed within the first section by applying a resin containing magnetic particles to the glass fibres, and the second section may be formed by towing glass fibres through a resin bath without magnetic particles. Although this involves a change in the resin application during the manufacture, it minimises the quantity of magnetic particles used during the process, thus reducing cost. Alternatively two different types of prepreg fibres may be used, one with magnetic particles and one without.

It should be noted that each section may comprise several layers of fibres. A typical layer of filaments in around 0.1 to 0.8 mm thick and therefore a large number of layers may be wound onto the mandrel to form each section.

Because the first and second sections of the glass fibre cylinder (i.e. the first hollow cylinder) are of similar properties (the presence of the magnetic particles does not alter the modulus or coefficient of thermal expansion significantly), these two sections can be co-cured so that they are chemically bonded by polymer cross links. Although these two sections could be formed and cured separately and subsequently fitted together (again, by interference fit for example), it is generally preferred to wind and cure them together for cost reasons.

There are two further advantages to forming the carbon fibre cylinder separately from the glass fibre cylinder. The first is that Archimedes' principal can be used to determine the volume of the carbon fibre cylinder which can in turn be used to determine the fibre, resin and void volume fractions through non-destructive means. By contrast, when the carbon and glass sections are cured together, there are too many variables for such a calculation due to the different densities of resin, carbon fibre, glass fibre and magnetic particles. The second advantage is that the filament winding machine can be better optimised for each part. For example the winding machine can be optimised for winding glass fibre, then one or more glass fibre cylinders may be wound and cured. Then the winding machine can be reconfigured (and optimised) for winding carbon fibre (e.g. while the glass fibre cylinders are curing). One or more carbon fibre parts can then be wound optimally and then cured. Reconfiguring the winding machine can take upwards of an hour. The more time that is available, the more reconfiguration steps can be carried out and the better the machine can be optimised for the next process. Such configurations may include for example changing the resin bath or resin application process, changing the fibre contact points, fibre tension, winding angle and other process parameters. By contrast, when the carbon fibre is wound directly onto the glass fibre for subsequent co-curing there is limited time for machine reconfiguration between the winding steps. During this time, the wound glass fibre part remains in the machine in an uncured state and if left for too long the resin may run and fibres may sag.

There are different ways in which the two cylinders (glass fibre and carbon fibre) may be located or arranged adjacent to each other. In some examples forming the second hollow cylinder may comprise winding carbon fibre round the cured first hollow cylinder. Once the matrix of the first hollow cylinder has been cured it will not chemically bond to the matrix of the second hollow cylinder (at least not to any significant degree), by which it is meant that there will be no (or no significant amount of) cross-linking with the already cured first hollow cylinder. Moreover as the matrix of the first hollow cylinder has already undergone its chemical shrinkage during its own curing process, this leads to a reduction in stress build up between the two cylinders.

The mechanical bond that is formed between the two cylinders by this process may be sufficient for some purposes, but it may be affected by temperature changes that cause differing expansion/contraction between the two cylinders with the risk that the two cylinders separate, constituting a product failure. The method may therefore further comprise: applying an adhesive layer to the outside surface of the cured first hollow cylinder before forming the second hollow cylinder on top of the adhesive layer. The adhesive layer provides the necessary bond between the two cylinders to prevent them from separating. As the adhesive is applied after the first cylinder has cured, it is substantially mechanically or electrostatically bonded to the first cylinder, i.e. there is no significant degree of chemical bonding via cross-linking. However where the adhesive is formed from a similar or identical material to the matrix of the second cylinder (as would typically be the case for an epoxy-based adhesive and an epoxy resin matrix of the second cylinder), the curing of the second cylinder may result in a chemical bond (i.e. polymeric crosslinking) of the adhesive layer to the second cylinder. However as the adhesive layer does not contain any fibres (glass or carbon), shrinkage of the adhesive layer is not resisted in the same way as for the composite cylinders and therefore the adhesive layer is able to accommodate (i.e. take up) the stresses that are induced as a result of the differing moduli and CTEs.

The step of forming the first hollow cylinder may comprise forming a removable layer on the outer surface of the first hollow cylinder. After curing the first hollow cylinder, but before forming the second hollow cylinder, the removable layer may be removed. The removable layer may be a peel ply layer as is known in the art. This layer is cured together with the underlying glass fibre composite, but is designed to be removed to leave a well-prepared surface for application of the carbon fibre layer or adhesive layer. The peel ply layer typically ensures that the surface remaining after removal of the peel ply is sufficiently smooth and regular for direct application of carbon fibre, but on a smaller scale is also sufficiently rough that it is keyed for mechanical bonding (i.e. non-cross-linked bonding) of an adhesive layer if used.

Alternatively, instead of forming the second cylinder directly on top of the cured first cylinder, the two cylinders may be formed completely separately (e.g. on separate mandrels) and subsequently press fit together. Thus the method may further comprise: inserting the first hollow cylinder inside the second hollow cylinder such that they form an interference fit between an outer surface of the first hollow cylinder and an inner surface of the second hollow cylinder. Once the glass composite cylinder has been cured, the outer diameter will likely need to be machined to match a chosen diameter selected in accordance with the carbon composite cylinder's internal diameter. The glass cylinder is then press fitted into the carbon cylinder.

Although no significant bond strength or interference is strictly required for correct operation (the spinning of the flywheel causes the inner cylinder to press radially outwardly on the outer cylinder, thus creating friction and compression that hold the two cylinders together), in the static non-spinning condition at low temperature (e.g. in cold countries) a radial tensile strength will be required to avoid disengagement of the two cylinders. Forming the outer diameter of the glass fibre composite cylinder to match the inner diameter of the carbon fibre composite cylinder may provide sufficient mechanical interference, but a light interference fit (e.g. of approximately 0.1mm) may be used to enhance the engagement. Therefore preferably the glass fibre composite cylinder is formed with an outer diameter slightly larger than the inner diameter of the carbon fibre composite cylinder to ensure a strong interference fit between the two. A lubricant may be used to facilitate the press fitting operation (i.e. to reduce the force required). Lubricant may be applied between the glass fibre composite cylinder and the carbon fibre composite cylinder to facilitate the inserting step. Preferably an epoxy based adhesive is used to act as the lubricant. The epoxy based adhesive can be heated up to a runny state in which it acts as a lubricant. Upon subsequent cooling (after the press fit operation), the adhesive returns to a less runny, more sticky state. The part (i.e. the first cylinder, second cylinder and adhesive lubricant) may then undergo a further short curing step to set the epoxy adhesive. This short curing step will cause cross-linking within the adhesive, but as the first and second cylinders have already been cured, there is substantially no chemical bonding (i.e. polymer cross-linking) between the adhesive and the cured parts. Further, as the two parts were each separately cured before this final curing step, no stresses are built up between the two cylinders.

As discussed above, the method may further comprise a step of removing material (e.g. by turning or similar) from the outer surface of the glass fibre composite cylinder to smooth the surface prior to the inserting step.

The method may further comprise a step of magnetising the magnetic particles in the glass fibre composite cylinder to form a series of magnetic poles for interaction with a stator placed inside the cylinder. This is typically done post-cure of the inner cylinder.

It will be appreciated that forming the hollow cylinders of glass fibre composite and carbon fibre composite may each comprise winding glass fibre round a mandrel in known fashion. As the flywheel is largely reliant on circumferential tension strength, the fibres are hoop wound, i.e. the fibres extend in a circumferential direction around the cylinder, with a very high hoop angle (i.e. a tight helix, e.g. 89 degrees to the axis of the cylinder or as close to 90 degrees as the design, material and process permits).

The techniques described here are particularly well suited to formation of larger mass flywheels, i.e. flywheels with a larger volume of resin and fibre. For example, flywheels with a length of at least 500 mm (i.e. length in the axial direction) typically have a sufficiently large volume of resin that the heat from the exothermic curing reaction can adversely affect the material properties (greater propensity to crack) under the single-cure process. Using the above techniques with two separate curing steps, flywheels with a length of at least 500 mm, preferably at least 600 mm, more preferably at least 700 mm, still more preferably at least 800 mm may be reliably formed without unsafe crack formation. By way of example, such flywheels typically have an inner diameter of from 150 mm to 300 mm and an outer diameter from 250 mm to 400 mm. The difference between the inner and outer diameters is typically at least 50 mm, more typically at least 75 mm.

According to another aspect, this disclosure provides a flywheel comprising: a first hollow cylinder of glass fibre composite with magnetic particles dispersed through at least part of the cylinder; and a second hollow cylinder of carbon fibre composite surrounding said cylinder of glass fibre composite and being substantially not chemically bonded thereto by polymeric cross-linking.

It will be appreciated that the preferred features discussed above apply equally to this aspect of the disclosure.

As discussed above there is no or substantially no cross linking between the first and second hollow cylinder materials. The engagement between the two cylinders is instead typically a mechanical interface such as an interference fit. If an adhesive layer is present between the two cylinders, it is preferably mechanically or electrostatically adhered to at least one of the cylinders without any (or without any great degree of) polymeric cross-linking.

The hollow cylinder of glass fibre composite may comprise an inner layer containing magnetic particles and an outer layer containing substantially no magnetic particles. In this context it will be appreciated that substantially no magnetic particles means apart from incidental quantities. These inner layer and outer layer may be chemically bonded by polymer crosslinks (in contrast to the bond between the two cylinders). It will be appreciated that this chemical crosslinking may arise through the use of the same or similar matrix materials (e.g. the same epoxy resin) in the two layers. The flywheel may further comprise a layer of adhesive between the first cylinder and the second cylinder as discussed above.

The flywheel typically forms part of an energy storage device which further comprises a stator positioned coaxially within the composite cylinders. The stator can be arranged and used to induce rotation of the flywheel (which may be mounted on bearings, preferably low friction bearings such as magnetic bearings or an end cap of the flywheel mounted to an axial spindle of the stator) to store energy and also to generate electricity from the rotational kinetic energy of the flywheel.

In some examples an end cap is mounted to end of the flywheel, e.g. fitted into the internal diameter of the glass fibre cylinder. The end cap may form part of a bearing for mounting the flywheel to a stator.

The polymeric matrix can comprise (i.e. comprise, consist essentially of, or consist of) any suitable polymeric material as long as it is compatible with the fibres and will adequately adhere to them. The matrix may consist of one or more types of polymer. Preferably, the polymeric matrix comprises a thermoset material. In one example the polymeric phase may consist of thermoset material(s) that are temperature-resistant. Examples of suitable thermoset polymers are epoxy resins, e.g. epoxy anhydrides, epoxy amines, polyester resins, phenolic resins, vinyl esters; Bis-Maleimids (BMI); polyether ether ketones (PEEK). Examples of suitable thermoplastic polymers are poly ether ketone-ketones (PEKK); polyphenylene sulfides (PPS); etc.

Most preferably, the polymer matrix comprises one or more polymers selected from epoxy resins, e.g. a cross-linked epoxy resin, such as an epoxy anhydride.

Other components such as curing agents, cross-linking agents, etc. may also be present in the polymer matrices.

The composite cylinders may be produced via any suitable technique, e.g. filament winding or tape laying.

### Brief Description of the Drawings

One or more non-limiting examples will now be described, with reference to the accompanying drawings, in which:
- Fig. 1a: illustrates a press-fit assembly of a first example;
- Fig. 1b: shows the final product of Fig. 1 a;
- Fig. 2a: shows an intermediate product of a first stage of a second example;
- Fig. 2b: illustrates a second stage of the second example;
- Fig. 2c: shows the various layers in the second example;
- Fig. 3: illustrates a manufacturing process for the first example; and
- Fig. 4: illustrates a manufacturing process for the second example.

### Detailed Description

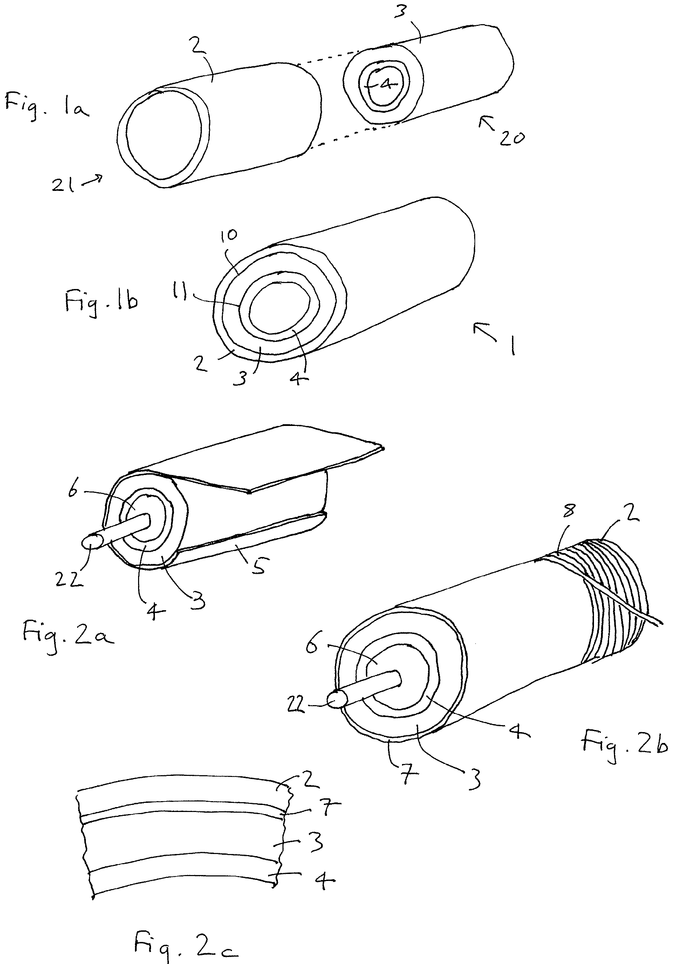

Fig. 1 a shows a first example of a method of manufacturing a flywheel. A first cylinder 20 and a second cylinder 21 are combined together to form a flywheel 1 as shown in Fig. 1 b.

The first cylinder 20 is formed from an inner section 4 of glass fibre with magnetic particles dispersed therein and an outer section 3 of glass fibre with no magnetic particles dispersed therein. This inner section 4 may be referred to as a magnetically loaded composite (MLC) section 4. The outer section 3 is referred to herein as the glass fibre (GF) section 3. These inner section 4 and outer section 3 are formed from substantially hoop wound (i.e. tight helix or high helix angle) glass fibre impregnated in a resin matrix, wound around a mandrel and then cured (e.g. at high temperature in the case of a thermosetting matrix, although it will be appreciated that other matrix materials and other curing methods such as photocuring or microwave curing may be used instead).

The second cylinder 21 is formed from a section 2 of carbon fibre in a matrix (i.e. it is a carbon fibre reinforced polymer, CFRP section) and is separately formed, e.g. on a separate mandrel, and is separately cured (again, typically cured at high temperature, but other curing methods may apply).

The first cylinder 20 is formed with an outer diameter that matches (or is slightly larger than) the inner diameter of the second cylinder 21. After both the first cylinder 20 and second cylinder 21 have been separately cured, they are press fit together by inserting the first cylinder 20 inside the second cylinder 21. The two cylinders 20, 21 are engaged with one another by a friction or interference fit. If the inner cylinder 20 was formed and machined to an outer diameter greater than the inner diameter of the second cylinder 21 then a greater force will be required to press fit the two parts 20, 21 together, but the interference fit will be much stronger. Purely by way of example, a typical size difference is an outer diameter of the first cylinder 20 around 0.1 mm greater than the inner diameter of the second cylinder 21.

As the two cylinders 20, 21 are cured separately and press fit together, the interface 10 that is formed between them in the final product 1 is not a chemical bond, but a purely mechanical bond (interference fit). The stresses that form in each of the two cylinders 20, 21 during the curing process therefore do not transfer to the other cylinder 21, 20 which reduces the risk of crack formation and delamination. In turn, this reduces the failure rate of the product 1 and increases the yield of the manufacturing process.

The interface 11 between the magnetically loaded composite (MLC) section 4 and the glass fibre (GF) section 3 is a chemical bond that is formed by polymeric crosslinking between the resin matrices of the two sections 3, 4. This chemical bond forms during the curing process as these two sections 3, 4 are cured together. As the properties of the inner and outer sections 3, 4 are sufficiently similar, no significant stress gradient develops across this interface during the curing process.

Figs 2a and 2b illustrate a second example of a method for manufacturing a flywheel 1. In the first stage, illustrated in Fig. 2a, the GF section 3 and MLC section 4 are formed in the same way as described in relation to Fig. 1 a above, except that before curing, a third removable section 5 is applied to the outside of the GF section 3. The removable section 5 is a peel ply layer that is used to ensure a good outer surface of the GF section 3 ready for the second stage of manufacture. The three sections 3, 4 and 5 are all cured together and after curing the removable section 5 is removed. Fig. 2a shows the removable section 5 in the process of being removed to expose the underlying surface of the GF section 3. Figs. 2a and 2b also show a shaft 22 having a larger diameter mandrel section 6 onto which the fibres are wound.

After the peel ply section 5 has been removed, an adhesive layer 7 is applied to the outer surface of the GF section 3. Then resin impregnated carbon fibre 8 is wound onto the adhesive layer 7 to a desired thickness. A second curing step then cures the carbon fibre section 2 (and in the case of a curable adhesive 7, this is also cured in this step). As the underlying section 3 has already been cured, no chemical bond (i.e. no polymeric crosslinking) is formed between the adhesive 7 and the GF section 3. Accordingly, the stresses that build in the carbon fibre section 2 during the second curing process do not transfer to the glass fibre section 3 and therefore there is no large stress gradient that risks crack formation and delamination. There will still be a difference in modulus and a difference in coefficient of thermal expansion between the CF section 2 and the adhesive layer 7, but as there is no high modulus material in the adhesive layer 7, to resist shrinkage, the adhesive layer 7 is able to accommodate the induced stresses more easily. The sections of the final product are shown in Fig. 2c. It will be appreciated that the sections depicted here are not shown to scale. The adhesive layer 7 and the peel ply layer 5 are in real examples much thinner than is depicted in Figs. 2a to 2c.

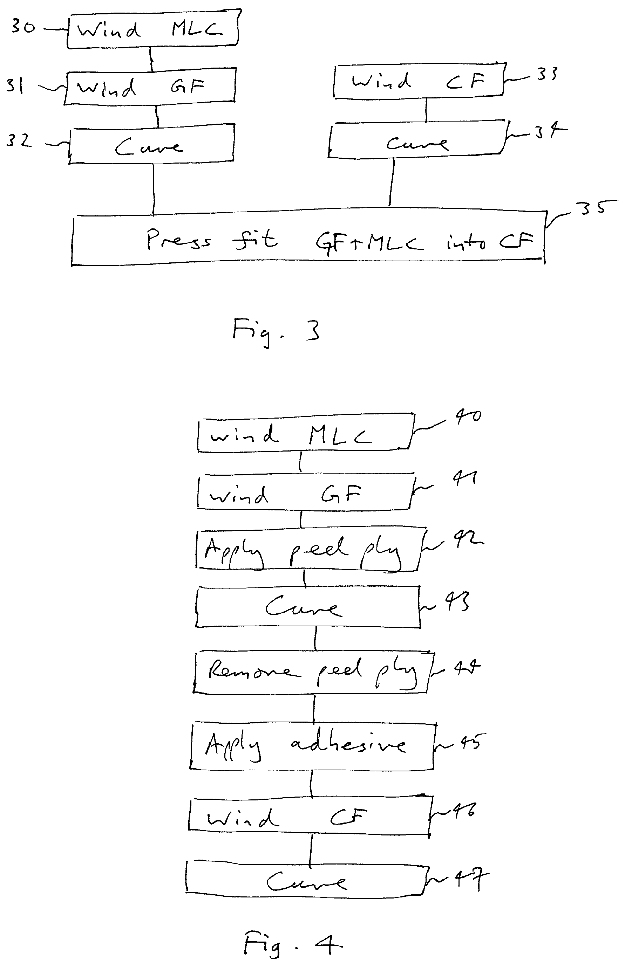

Fig. 3 illustrates the steps of the process that is used to form the flywheel 1 in the first example as shown in Figs. 1 a and 1 b.

In step 30 the magnetically loaded composite (MLC) section 4 is wound onto a mandrel, this section 4 comprising glass fibre impregnated with a matrix with magnetic particles dispersed therein. The matrix may be applied to the glass fibre filaments by any suitable technique. The fibres are hoop wound for maximum circumferential strength. In step 31 the glass fibre (GF) composite section 3 is wound onto the MLC section 4 (without any intermediate curing). The GF section 3 is also hoop wound for maximum circumferential strength, but the fibre tow is impregnated with resin without any dispersed magnetic particles. The resin may be applied to the glass fibre filaments by any suitable technique such as towing the filaments through a resin bath. The same glass fibre tow may be used in both sections 4 and 3. In step 32 the sections 3 and 4 are simultaneously cured, e.g. by heating in an oven using the desired cure cycle.

In step 33, the carbon fibre (CF) composite section 2 is formed by winding a carbon fibre tow impregnated with resin around a separate mandrel. Again, the CF filaments are hoop wound for maximum circumferential strength. In step 34 the CF composite section 2 is cured using a suitable cure cycle.

Steps 30, 31 and 32 may be carried out completely separately from steps 33 and 34. It is not important whether the CF section 2 is formed before, after or simultaneously with the GF+MLC sections. After both curing steps 32, 34 have been carried out, the first cylinder 20 (GF+MLC) is press fitted into the second cylinder 21 in step 35 so as to form the final flywheel 1 as shown in Fig. 1 b.

Fig. 4 illustrates the steps of the process that is used to form the flywheel 1 in the second example as shown in Figs. 2a, 2b and 2c.

In step 40 the magnetically loaded composite (MLC) section 4 is wound onto a mandrel, this section 4 comprising glass fibre impregnated with a matrix with magnetic particles dispersed therein. The matrix may be applied to the glass fibre filaments by any suitable application or impregnation technique. The fibres are hoop wound for maximum circumferential strength. In step 41 the glass fibre (GF) composite section 3 is wound onto the MLC section 4 (without any intermediate curing). The GF section 3 is also hoop wound for maximum circumferential strength, but the filaments are impregnated with resin without any dispersed magnetic particles. This may be achieved for example by towing the filaments through a resin bath. This may involve switching from a direct application technique to a resin bath application technique between the winding of sections 4 and 3. The same glass fibre tow may be used in both layers 4 and 3. In step 42 a removable, peel ply section 5 is applied to the outer surface of the GF section 3. In step 43 the sections 3, 4 and 5 are simultaneously cured, e. In step 44 the removable, peel ply section 5 is removed by peeling it away, leaving behind the GF and MLC sections 3, 4. The outer surface of GF section 3 that is left after removal of the peel ply section 5 is of uniform diameter, but textured so as to provide a good key for adhesive layer 7 (i.e. it permits a good mechanical bond with adhesive layer 7). In step 45 an adhesive layer 7 is applied to the outer surface of the cured GF section 3. In step 46 the carbon fibre (CF) composite section 2 is formed by winding carbon fibre filaments impregnated with resin around the adhesive layer 7. Again, the CF filaments are hoop wound for maximum circumferential strength. In step 47 the CF composite section 2 (and, possibly adhesive layer 7, depending on the particular adhesive chosen) is cured. The resulting, fully cured flywheel 1 has layered structure as shown in Fig. 2c.

It will be understood that the description above relates to a non-limiting example and that various changes and modifications may be made from the arrangement shown without departing from the scope of this disclosure, which is set forth in the accompanying claims.

## Claims

1. A method of manufacturing a flywheel comprising:
forming a first hollow cylinder from glass fibre composite with magnetic particles dispersed through at least part of the cylinder;
curing said first cylinder in a first curing step;
forming a second hollow cylinder from carbon fibre composite; and
curing said second hollow cylinder in a second curing step.

2. A method as claimed in claim 1, wherein the step of forming said glass fibre composite cylinder comprises:
forming a first section of glass fibre composite with magnetic particles dispersed therein; and
forming a second section of glass fibre composite around said first section without magnetic particles dispersed therein.

3. A method as claimed in claim 2, wherein the magnetic particles are dispersed within the first section by applying a resin containing magnetic particles to the glass fibres, and wherein the second section is formed by towing glass fibres through a resin bath without magnetic particles.

4. A method as claimed in claim 1, 2 or 3, wherein forming the second hollow cylinder comprises winding carbon fibre round the cured first hollow cylinder.

5. A method as claimed in claim 4, further comprising:
applying an adhesive layer to the outside surface of the cured first hollow cylinder before forming the second hollow cylinder on top of the adhesive layer.

6. A method as claimed in claim 4 or 5, wherein the step of forming the first hollow cylinder comprises forming a removable section on the outer surface of the first hollow cylinder and wherein after curing the first hollow cylinder, but before forming the second hollow cylinder, the removable section is removed.

7. A method as claimed in any of claims 1 to 3, further comprising:
inserting the first hollow cylinder inside the second hollow cylinder such that they form an interference fit between an outer surface of the first hollow cylinder and an inner surface of the second hollow cylinder.

8. A method as claimed in claim 7, further comprising a step of removing material from the outer surface of the glass fibre composite cylinder to smooth the surface prior to the inserting step.

9. A method as claimed in claim 7 or 8, wherein the glass fibre composite cylinder is formed with an outer diameter slightly larger than the inner diameter of the carbon fibre composite cylinder to ensure a strong interference fit between the two.

10. A method as claimed in claim 7, 8 or 9, further comprising applying a lubricant between the glass fibre composite cylinder and the carbon fibre composite cylinder to facilitate the inserting step.

11. A method as claimed in claim 10, wherein the lubricant is an adhesive heated to a temperature sufficient to cause it to act as a lubricant.

12. A flywheel comprising:
a first hollow cylinder of glass fibre composite with magnetic particles dispersed through at least part of the cylinder; and
a second hollow cylinder of carbon fibre composite surrounding said cylinder of glass fibre composite and being substantially not chemically bonded thereto by polymeric cross-linking.

13. A flywheel as claimed in claim 12, wherein the hollow cylinder of glass fibre composite comprises an inner section containing magnetic particles and an outer section containing substantially no magnetic particles.

14. A flywheel as claimed in claim 13, wherein said inner section and outer section are chemically bonded by polymer crosslinks.

15. A flywheel as claimed in claim 12, 13 or 14, further comprising a layer of adhesive between the first cylinder and the second cylinder.
